# EUROPÄISCHE PATENTSCHRIFT

(11) **EP 3 531 333 B1**
(45) Veröffentlichungstag und Bekanntmachung des Hinweises auf die Patenterteilung: **15.04.2020**
(21) Anmeldenummer: 18158375.8
(22) Anmeldetag: 23.02.2018
(51) Int. Cl.: G06F 21/64, H04L 9/32

(54) **MANIPULATIONSGESCHÜTZTE SPEICHERUNG BEWEISERHEBLICHER DATEN**
MANIPULATION-PROOF STORAGE OF EVIDENCE DATA
MISE EN MÉMOIRE PROTÉGÉE CONTRE LA MANIPULATION DE DONNÉES À CONVICTION

(43) Veröffentlichungstag der Anmeldung: 28.08.2019
(73) Patentinhaber: VEGA Grieshaber KG, 77709 Wolfach (DE)
(72) Erfinder: HUMMEL, Jakob, 79215 Elzach (DE); KOPF, Lukas, 77978 Schuttertal (DE)
(74) Vertreter: Maiwald Patent- und Rechtsanwaltsgesellschaft mbH

(56) Entgegenhaltungen:
- US-A1- 2014 025 944
- US-A1- 2017 109 735
- US-A1- 2018 025 365

## Beschreibung

Die vorliegende Erfindung betrifft die gegen nachträgliche Verfälschung oder Unterdrückung gesicherte Speicherung von beweiserheblichen Daten, insbesondere Sensordaten von industriellen Feldgeräten.

### Stand der Technik

Die Erfassung von Daten in digitaler Form erleichtert mit der Handhabung der Daten gemäß ihrer Zweckbestimmung zugleich auch ihre nachträgliche Manipulation oder Unterdrückung. Ein Paradebeispiel hierfür sind Kilometerzähler für Pkw. Um den Kilometerstand nachträglich nach unten zu manipulieren und beim Wiederkauf des Pkw einen betrügerischen Vorteil zu erzielen, wurden frühere analoge Zählwerke beispielsweise mit einer Bohrmaschine rückwärts gedreht. Hierbei war allerdings handwerkliches Geschick erforderlich, um keinerlei verräterische Spuren zu hinterlassen. Als sich digitale Kilometerzähler durchsetzten, etablierte sich sehr schnell ein florierender Markt für sogenannte "Tachojustierer". Der Gesetzgeber gebot diesem Treiben schließlich in 2005 Einhalt, indem ins Straßenverkehrsgesetz ein neuer § 22b aufgenommen wurde, der die Manipulation von Kilometerzählern sowie Herstellung, Beschaffung und Überlassung entsprechender Software unter Strafe stellt.

Ein anderes wichtiges Beispiel für beweiserhebliche Daten sind Protokolldateien (Logfiles) von Computersystemen. Die Information, wann von welcher IP-Adresse aus ein Zugriff erfolgt ist, kann wertvoll sein, um Angriffe auf ein System aufzuklären. Hat aber der Angreifer erst einmal einen privilegierten Zugang, hat er auch Schreibzugriff auf die Logfiles und kann seine Spuren verwischen.

US 2018/025 365 A1 und US 2017/109 735 A1 offenbaren jeweils Verfahren zur Speicherung von Nutzdaten in einer Blockchain. Die so gespeicherten Nutzdaten lassen sich im Nachhinein unbemerkt weder verändern noch unterdrücken.

US 2014/025 944 A1 offenbart einen Hardwarebaustein für die kryptographisch abgesicherte Speicherung von Nutzdaten.

### Aufgabe und Lösung

Es ist daher die Aufgabe der vorliegenden Erfindung, ein Verfahren zum Speichern beweiserheblicher Daten zur Verfügung zu stellen, das die nachträgliche unbemerkte Verfälschung oder Unterdrückung der Daten deutlich erschwert.

Diese Aufgabe wird erfindungsgemäß gelöst durch ein Verfahren gemäß Hauptanspruch, speziell zur Durchführung des Verfahrens geeignete liefernde und verwahrende Geräte gemäß Nebenansprüchen sowie ein zugehöriges Computerprogramm und computerlesbares Medium.

### Offenbarung der Erfindung

Im Rahmen der Erfindung wurde ein Verfahren zur manipulationsgeschützten Speicherung von Nutzdaten entwickelt. Dabei ist der Begriff "manipulationsgeschützt" nicht dahingehend einschränkend zu verstehen, dass eine Manipulation physisch unterbunden wird. Vielmehr ist hierunter zu verstehen, dass die Manipulation bemerkt wird, so dass ihr eigentliches Ziel, nämlich die Täuschung über den Inhalt der Nutzdaten, nicht mehr erreicht werden kann.

Gemäß dem Verfahren werden die Nutzdaten in einer Kette von Datensätzen abgelegt. Beispielsweise kann jeder Datensatz die zu einem bestimmten Abfragezeitpunkt vorliegenden Daten enthalten.

Für jeden Datensatz wird ein Aktuell-Hashwert mindestens über die in dem Datensatz enthaltenen Nutzdaten gebildet und in dem Hashwert abgelegt. Durch eine spätere erneute Bildung des Hashwerts über die Nutzdaten und Vergleich mit dem zuvor im Datensatz abgelegten Hashwert kann dann festgestellt werden, ob die Nutzdaten nachträglich manipuliert worden sind. Wurden die Nutzdaten manipuliert, so sind die Hashwerte nicht identisch.

Für die Bildung des Hashwerts kann eine beliebige Hashfunktion (im Deutschen auch bekannt als Streuwertfunktion) verwendet werden, die einen Datensatz beliebiger Länge auf einen Hashwert mit fester Länge abbildet. Der Fachmann wird aus dem reichhaltigen Angebot an Hashfunktionen für die jeweilige Anwendung diejenige auswählen, die einen optimalen Kompromiss zwischen dem Aufwand an Hardware und Rechenzeit für die Berechnung einerseits und dem Sicherheitsniveau andererseits darstellt. Das Sicherheitsniveau der Hashfunktion wird im Kontext der vorliegenden Erfindung hauptsächlich durch die Kollisionsresistenz bestimmt, also über den Aufwand, der erforderlich ist, um zu einem ersten Datensatz einen zweiten zu finden, der auf den gleichen Hashwert abgebildet wird wie der erste.

Wenn die verwendete Hashfunktion für die jeweilige Anwendung hinreichend kollisionsresistent ist, können die Nutzdaten nur noch unbemerkt manipuliert werden, indem entweder der Hashwert selbst gegen einen nach der Manipulation neu berechneten Hashwert ausgetauscht wird oder indem der Datensatz als Ganzes unterdrückt, d.h. "verschwinden gelassen", wird. Um beide Manipulationen zugleich zu erschweren, wird in jedem Datensatz ein Vorgänger-Hashwert abgelegt, der dem Aktuell-Hashwert des vorherigen Datensatzes entspricht. Dabei tritt im ersten Datensatz der Kette ein vorgegebener Wurzel-Hashwert an die Stelle des Vorgänger-Hashwerts. Wenn nun in einem gegebenen Datensatz der Aktuell-Hashwert verändert wird oder aber dieser Datensatz vollständig entfernt wird, so wird sich dies dahingehend bemerkbar machen, dass es in der Kette einen Datensatz gibt, dessen Aktuell-Hashwert nicht mit dem Vorgänger-Hashwert des nächsten Datensatzes übereinstimmt.

Damit ist die Aufgabe, die Nutzdaten manipulationsgeschützt zu speichern, reduziert auf die Aufgabe, die Hashwerte manipulationsgeschützt aufzubewahren.

Die Kette der Hashwerte wird in einem persistenten Speicher abgelegt dergestalt, dass ein in dem persistenten Speicher einmal abgelegter Inhalt im Nachhinein weder veränderbar noch aus dem persistenten Speicher entfernbar ist. Die Datensätze werden in einem von dem persistenten Speicher verschiedenen reversiblen Speicher abgelegt.

Es wurde erkannt, dass gerade diese Art der Arbeitsteilung zwischen dem persistenten Speicher einerseits und dem reversiblen Speicher andererseits es für eine breite Klasse von Anwendungen praktikabel macht, für den Schutz der Nutzdaten vor Manipulation überhaupt einen persistenten Speicher zu verwenden. Theoretisch könnte man es sich auch einfach machen und die Nutzdaten direkt in den persistenten Speicher schreiben. Allerdings würde man hierbei sehr bald an Grenzen stoßen, da beispielsweise ein physischer Speicherbaustein oder ein nur einmal beschreibbares optisches Speichermedium (etwa CD-R) eine endliche Kapazität hat. Es wäre also ein ständiger personeller und finanzieller Aufwand erforderlich, um entsprechendes Einweg-Verbrauchsmaterial zu ersetzen. Werden hingegen nur die Hashwerte in dem persistenten Speicher abgelegt, so ist der Verbrauch an persistenter Speicherkapazität von der Menge der zu speichernden Nutzdaten entkoppelt. Jede beliebige Menge an Nutzdaten in einem Datensatz wird immer auf einen Hashwert mit der gleichen Menge abgebildet.

Mengentreiber für den Verbrauch an persistenter Speicherkapazität ist somit nur noch die zeitliche Frequenz, in der neue Datensätze gespeichert werden, und der durch jede einzelne Speicherung verursachte Verbrauch ist minimal. Auf diese Weise wird es für eine breite Klasse an Anwendungen möglich, einerseits die in der jeweiligen Anwendung anfallende Datenmenge zu bewältigen und andererseits mit einem vorgegebenen Budget für die persistente Speicherung auszukommen. Dabei richtet sich die zu wählende zeitliche Frequenz für die Speicherung neuer Datensätze hauptsächlich nach dem Bedürfnis der jeweiligen Anwendung, auf welchen Zeitraum eine eventuell erkannte Manipulation der Nutzdaten im Nachhinein eingrenzbar sein soll.

Weiterhin ist der Manipulationsschutz für die Nutzdaten auch dahingehend von den Nutzdaten selbst entkoppelt, dass der Inhalt des persistenten Speichers keinen Rückschluss auf die Nutzdaten selbst zulässt und somit keiner Geheimhaltung bedarf. In vielen Anwendungen gibt es Daten, die zur Erfüllung gesetzlicher oder behördlicher Dokumentationspflichten manipulationsgeschützt zu speichern, zugleich aber vertraulich zu behandeln sind. So können beispielsweise die in einer Industrieanlage für den Nachweis der Erfüllung von Umweltauflagen gespeicherten Messdaten Rückschlüsse auf den Produktionsprozess zulassen, bei dem es sich um das Kern-Know-How des Unternehmens handelt. Dies stellte bislang ein Hemmnis gegen die Beauftragung externer Dienstleister für die manipulationsgeschützte Speicherung dar. Gleiches galt beispielsweise für personenbezogene Daten, bei denen die Auftragsdatenverarbeitung außerhalb der EU an strenge Voraussetzungen geknüpft ist. Die Hashwerte hingegen können bedenkenlos aus der Hand gegeben werden.

Beispielsweise kann der Betreiber einer Industrieanlage durch Publikation der Kette von Hashwerten im Bundesanzeiger oder einem vergleichbaren Amtsblatt vollständige Transparenz in Bezug auf die Erfüllung von Umweltauflagen oder Dokumentationspflichten im Umgang mit kontrollierten Substanzen, wie etwa Kernbrennstoffen oder Betäubungsmitteln, garantieren, ohne sensible Interna preisgeben zu müssen. Die Nutzdaten selbst verbleiben beim Betreiber. Wenn der Betreiber die Nutzdaten später auf anlassbezogene behördliche Anforderung zur Überprüfung herausgibt, lässt sich an Hand der Kette der Hashwerte nachweisen, dass die Daten vom Betreiber nicht im Nachhinein "frisiert" wurden. In diesem Zusammenhang ist auch die Verdichtung der Information durch die Bildung der Hashwerte wichtig, da etwa die Veröffentlichung im Bundesanzeiger nach Anzahl der Zeichen im Dokument abgerechnet wird.

Besonders vorteilhaft wird mindestens einer der Hashwerte in der Kette gemeinsam mit einem Zeitstempel in dem persistenten Speicher abgelegt, und/oder die Nutzdaten mindestens eines Datensatzes enthalten einen Zeitstempel. Auf diese Weise kann persistent beglaubigt werden, wann die entsprechenden Nutzdaten vorgelegen haben. Hierbei kann insbesondere auch ein "Vier-Augen-Prinzip" angewendet werden dergestalt, dass die Nutzdaten einen ersten Zeitstempel enthalten und ein gemeinsam mit den Hashwerten im persistenten Speicher abgelegter zweiter Zeitstempel von einer anderen Entität generiert wird. Dies erschwert Manipulationen durch das Verstellen von Uhren.

Weiterhin lässt sich mit Zeitstempeln auch eine vollständige Transparenz dahingehend gewährleisten, zu welchen Zeiten die Erfassung der Nutzdaten aktiv war. So lässt sich beispielsweise die Abgabe einer unzulässigen Menge an Schadstoffen in die Umwelt nicht dadurch verschleiern, dass die entsprechenden Messinstrumente für die Dauer dieser Abgabe einfach abgeschaltet werden. Das Abschalten selbst mag zwar möglich sein (etwa durch Ausstecken des Strom- oder Netzwerkkabels), wird aber anhand der Unregelmäßigkeiten in den Zeitstempeln auffallen und Anlass zu entsprechenden Nachforschungen geben.

In einer weiteren besonders vorteilhaften Ausgestaltung werden für mindestens einen Datensatz die Nutzdaten, und/oder der Aktuell-Hashwert, dieses Datensatzes mit einem privaten kryptographischen Schlüssel signiert, und die Signatur wird mit in den Datensatz aufgenommen. Durch Prüfung der Signatur mit dem zugehörigen öffentlichen Schlüssel lässt sich gewährleisten, dass die Nutzdaten im Zeitraum zwischen ihrer Generierung und dem Ablegen des zugehörigen Hashwerts im persistenten Speicher nicht unbemerkt manipuliert werden.

Dies ist insbesondere in Anwendungen vorteilhaft, in denen die Ablage der Hashwerte in dem persistenten Speicher nicht durch die gleiche Entität erfolgt, die den Datensatz ursprünglich erzeugt hat.

Beispielsweise kann in einer besonders vorteilhaften Ausgestaltung der Datensatz durch ein erstes, lieferndes Gerät erzeugt werden, während das Ablegen der Hashwerte in dem persistenten Speicher durch ein zweites, verwahrendes Gerät erfolgt. Dann kann insbesondere auch das Signieren der Datensätze durch das liefernde Gerät erfolgen.

Diese Arbeitsteilung zwischen dem liefernden und dem verwahrenden Gerät ist insbesondere für die Erfassung von Messdaten in Industrieanlagen vorteilhaft. Hier erfolgt die eigentliche Erfassung häufig durch Feldgeräte, die weder selbst mit einem persistenten Speicher ausgerüstet sind noch eigenständig über ein Netzwerk auf einen solchen persistenten Speicher zugreifen können. Vielmehr sind Feldgeräte als liefernde Geräte häufig über eine Netzwerkverbindung mit geringer Bandbreite, wie etwa eine Zweidraht-Verbindung oder eine LoRaWAN-Funkverbindung, an übergeordnete Geräte (Controller) angeschlossen. Da es in der Industrieanlage in der Regel sehr viel mehr Feldgeräte als übergeordnete Geräte gibt, sind diese übergeordneten Geräte mit höherwertiger Hardware und Netzwerkanbindung ausgestattet. Diese Hardware und Netzanbindung können genutzt werden, damit ein derartiges übergeordnetes Gerät als verwahrendes Gerät dienen kann.

Dabei gewährleistet die durch das liefernde Gerät erzeugte Signatur, dass die Nutzdaten weder während der Übertragung zum verwahrenden Gerät noch auf dem verwahrenden Gerät selbst unbemerkt manipuliert werden können. Für diese Signatur ist nur wenig zusätzliche Bandbreite auf der Netzwerkverbindung zum verwahrenden Gerät erforderlich.

Besonders vorteilhaft wird der Aktuell-Hashwert mindestens über eine Kombination aus den Nutzdaten und dem Vorgänger-Hashwert gebildet. Dann fällt eine Manipulation des Vorgänger-Hashwerts in einem Datensatz bereits an Hand nur dieses einen Datensatzes auf, ohne dass der vorherige Datensatz zur Prüfung des Vorgänger-Hashwerts heranzuziehen ist. Insbesondere werden Versuche, einen vorherigen Datensatz insgesamt zu unterdrücken ("verschwinden zu lassen"), frühzeitig erkannt.

In einer weiteren besonders vorteilhaften Ausgestaltung übermittelt das verwahrende Gerät über eine bidirektionale Kommunikationsverbindung den Vorgänger-Hashwert an das liefernde Gerät. Das liefernde Gerät erstellt unter Verwendung dieses Vorgänger-Hashwerts den jeweils nächsten Datensatz und übermittelt diesen an das verwahrende Gerät. Es ist dann nicht erforderlich, dass sich das liefernde Gerät nach der Erstellung eines jeden Datensatzes den gerade erzeugten Aktuell-Hashwert bis zur Erstellung des nächsten Datensatzes merkt, um ihn dort als Vorgänger-Hashwert zu verwenden. Insbesondere bei einem liefernden Gerät, das nicht ständig mit Strom versorgt ist, ist es also nicht erforderlich, ständig in einem nichtflüchtigen Speicher mit möglicherweise begrenzter Anzahl Schreibzyklen den Aktuell-Hashwert zu aktualisieren. Weiterhin wird es dem verwahrenden Gerät ermöglicht, Datensätze von mehreren liefernden Geräten in einer einzigen Kette zusammenzuführen. Beispielsweise kann das verwahrende Gerät die liefernden Geräte reihum ansprechen, um jeweils einen aktuellen Datensatz abzufragen.

Besonders vorteilhaft wird ein Feldgerät, das mit einem industriellen Produktionsprozess in direkter Beziehung steht, als lieferndes Gerät gewählt. Die Nutzdaten umfassen dann Messwerte mindestens eines Sensors, welcher in dem Feldgerät enthalten oder an das Feldgerät angeschlossen ist. Derartige Feldgeräte sind in einer Industrieanlage meistens in sehr großer Zahl vorhanden und werden zwecks Kostenersparnis nicht mit mehr Hardware ausgestattet als unbedingt nötig. Zugleich werden Feldgeräte typischerweise deutlich länger betrieben als verwahrende Geräte, teilweise für 10 Jahre und mehr. Die wichtigste Funktionalität des Verfahrens, nämlich die Aufteilung der Datenhaltung in einen persistenten Speicher für die Hashwerte einerseits und in einen reversiblen Speicher für die Nutzdaten andererseits, lässt sich allein in Regie des verwahrenden Geräts realisieren, ohne dass am liefernden Gerät Änderungen vorzunehmen sind.

In einer besonders vorteilhaften Ausgestaltung wird ein Speicher, dessen physikalischer Schreibprozess irreversibel ist, als persistenter Speicher gewählt. Dies kann beispielsweise ein OTP-ROM (One Time Programmable-ROM) sein, oder etwa ein optisches Speichermedium mit einer Schicht, in die geschriebene Bits durch einen Laserstrahl eingebrannt werden (wie etwa CD-R oder DVD-R). Die Historie der Hashwerte lässt sich dann im Nachhinein nicht mehr unbemerkt verändern. Allenfalls kann versucht werden, den Speicher gegen einen neuen auszutauschen. Mit geeigneten physischen Gegenmaßnahmen kann jedoch sichergestellt werden, dass ein solcher Austausch nicht unbemerkt möglich ist. So kann beispielsweise der Speicher mit einer unveränderbaren Seriennummer ausgestattet sein, die sich abfragen lässt. Der Speicher kann auch beispielsweise so fest montiert sein, dass eine Demontage zwangsläufig Spuren hinterlässt, und/oder der Ort, an dem er montiert ist, kann nur nach Bruch einer Versiegelung oder Verplombung zugänglich sein.

Wie zuvor beschrieben, ist dann die Kapazität des Speichers eine endliche, nicht erneuerbare Ressource. Da dort jedoch nur die Hashwerte und ggfs. Zeitstempel zu hinterlegen sind, kann diese Kapazität so bemessen werden, dass sie für die projektierte Betriebszeit ausreicht.

In einer weiteren besonders vorteilhaften Ausgestaltung wird ein verteilter Blockchain-Speicher, dessen Inhalt durch einen Konsens einer Vielzahl von Teilnehmern fortgeschrieben wird, als persistenter Speicher gewählt. Ein solcher Speicher ist besonders resistent gegen das nachträgliche Entfernen der Historie von Hashwerten. Zu diesem Zweck kann insbesondere eine öffentliche Blockchain verwendet werden, wie beispielsweise eine Blockchain, die Ethereum oder eine davon abgeleitete Kryptowährung verwaltet. Die Historie der Hashwerte wird dann auf alle Knoten der Blockchain weltweit verteilt.

Der Speicherplatz in der Blockchain ist weiterhin keine endliche Ressource, so dass das Verfahren beliebig lange fortgesetzt werden kann, ohne dass eine physische Speicherkapazität zur Neige geht. Dennoch wäre es aus zwei Gründen für die meisten Anwendungen nicht praktikabel, an Stelle der Kette der Hashwerte die Nutzdaten selbst in einer öffentlichen Blockchain zu hinterlegen.

Da der belegte Speicherplatz in der Blockchain auf jedem Knoten der Blockchain weltweit belegt wird, ist er zwar keine endliche Ressource, muss aber in der entsprechenden Kryptowährung teuer bezahlt werden. So kostet die persistente Speicherung in der Ethereum-Blockchain derzeit in der Größenordnung von 1 Euro-Cent pro Byte, was in etwa vergleichbar ist mit den Kosten, die bei Veröffentlichung im elektronischen Bundesanzeiger anfallen.

Weiterhin handelt es sich bei den meisten Nutzdaten um vertrauliche Informationen, die nicht veröffentlicht werden dürfen. Zwar ließe sich die Blockchain prinzipiell auch für die Aufbewahrung vertraulicher Informationen zweckentfremden, indem die Daten über eine Verschlüsselung geschützt werden. Dann steht und fällt die Vertraulichkeit aber damit, dass der im Nachhinein nicht mehr änderbare Schlüssel niemals in falsche Hände gerät. Jede Herausgabe der Daten, und somit auch des Schlüssels, wäre dann mit dem Risiko verbunden, dass der Schlüssel aus dem berechtigten Personenkreis weitergegeben wird und die Daten so letzten Endes öffentlich würden, was auch nie mehr rückgängig zu machen wäre.

Werden hingegen nur die Hashwerte öffentlich, so ist ausgeschlossen, dass sich hieraus die Originaldaten eindeutig rekonstruieren lassen, da Hashfunktionen nicht injektiv sind. Jede berechtigte Person, der die Originaldaten auf sicherem Wege übermittelt worden sind, hat jedoch die Möglichkeit, mit Hilfe der in der Blockchain hinterlegten Kette von Hashwerten auf Korrektheit und auch auf Vollständigkeit zu überprüfen.

In diesem Zusammenhang sei angemerkt, dass der Begriff der "Kette der Hashwerte" nicht dahingehend eingeschränkt ist, dass die Hashwerte in aufeinander folgenden Blöcken in der Blockchain abgelegt werden müssen. Gerade in einer öffentlichen Blockchain ist es häufig nur möglich, Daten zur Speicherung vorzulegen, ohne dass es eine Garantie dafür gibt, in welchem der nächsten Blöcke diese Speicherung tatsächlich vorgenommen wird. Unter anderem hängt die Reihenfolge der Speicherung davon ab, wieviel Kryptowährung ein jeder Teilnehmer, der Daten zur Speicherung angemeldet hat, für diese Speicherung jeweils geboten hat. Die Hashwerte können in der Blockchain über Blockgrenzen hinweg verkettet werden, indem beispielsweise jedem Hashwert ein Zeiger auf einen vorherigen und/oder nächsten Hashwert beigefügt wird.

Industrielle Feldgeräte als liefernde Geräte in Verbindung mit übergeordneten Geräten (Controllern) als verwahrende Geräte sind ein wichtiges Anwendungsbeispiel für das Verfahren. Das Verfahren ist jedoch nicht hierauf eingeschränkt, sondern sehr allgemein anwendbar, so unter anderem auch bei den eingangs erwähnten Beispielen Kilometerzähler und Logfiles.

Dabei kann die Anwendung im Fahrzeug gegenüber der Speicherung lediglich des Kilometerstandes wesentlich aufgewertet werden. Da die Hashwerte unabhängig vom Volumen der damit gesicherten Daten immer die gleiche Größe haben, können im Fahrzeug sehr detailreiche Daten über die Fahrzeugnutzung gespeichert und vor Manipulation geschützt werden. Da die Daten selbst das Fahrzeug hierfür nicht verlassen müssen, gibt es hierbei auch keine Beschränkungen, was den Datenschutz angeht. So können zunächst beispielsweise auch detaillierte Indikatoren gespeichert werden, die einen Rückschluss darauf zulassen, wie mit dem Fahrzeug insgesamt umgegangen wurde. Beispielsweise kann registriert werden, ob eher Kurzstrecke oder eher Langstrecke gefahren wurde und ob eher hochtourig oder eher niedertourig gefahren wurde. Auch können beispielsweise die Umgebungsbedingungen aufgezeichnet werden, um zu erfassen, ob das Fahrzeug überwiegend in Garagen abgestellt oder ständig ungeschützt den Elementen ausgesetzt ist.

Der Fahrzeugnutzer kann frei entscheiden, welche Informationen er herausgibt, und die Authentizität und Vollständigkeit dieser Informationen ist dann über die persistent gespeicherten Hashwerte gewährleistet. Um das selektive Herausgeben nur einzelner Arten von Informationen zu erleichtern, können hierfür separate Ketten von Datensätzen und Hashwerten geführt werden. Die Informationen können beispielsweise je nach dem Grad, zu dem sie Rückschlüsse auf das persönliche Verhalten des Fahrers zulassen und somit sensitiv sind, in verschiedene Niveaus eingeteilt werden, und für jedes Niveau können separate Ketten geführt werden. Der Fahrzeugnutzer kann sich dann beispielsweise auch jederzeit dazu entscheiden, die Nutzdaten in bestimmten Ketten ganz oder teilweise zu löschen, etwa um einen Abfluss von Informationen zu vermeiden, wenn er das Fahrzeug aus der Hand gibt. Dies beeinträchtigt weder die Fortführung der Ketten noch die Überprüfung der nicht gelöschten Nutzdaten. Die persistente Historie der Hashwerte offenbart lediglich nach wie vor, dass in einem bestimmten Zeitraum einmal Nutzdaten vorhanden waren.

Analog kann es auch bei der manipulationsgeschützten Speicherung von Logfiles vorteilhaft sein, die Einträge je nach Grad der Personenbezogenheit, je nach betroffenem Subsystem und/oder je nach Schweregrad des gemeldeten Problems auf unterschiedliche Ketten aufzuteilen.

Weiterhin können auch beispielsweise Kühlketten oder andere Transportbedingungen, etwa Erschütterungen oder Lichteinfall bei unbefugtem Öffnen eines Containers, überwacht werden, indem die Messwerte entsprechender Sensoren gemäß dem Verfahren manipulationsgeschützt gespeichert werden. Es ist dann insbesondere deutlich erschwert, Informationen dahingehend, dass bestimmte vorgegebene Bedingungen in einem gewissen Zeitraum nicht eingehalten wurden, nachträglich zu unterdrücken. Eine zeitgestempelte Historie von Hashwerten beweist zweifelsfrei, dass die Messung im fraglichen Zeitraum aktiv war. Eine zeitliche Lücke in dieser Historie ohne plausiblen Grund kann als Manipulationsversuch gewertet und die Abnahme der gelieferten Ware verweigert werden.

Eine weitere beispielhafte Anwendung sind Gesundheitsdaten. Werden beispielsweise bei einem Patienten regelmäßig Blutwerte, Ergebnisse einer Körperanalysewaage oder andere Parameter erhoben, so kann der Patient versucht sein, zwischenzeitliche schlechte Werte zu "vergessen", um bei einem privaten Krankenversicherer Risikozuschläge zu vermeiden. Wird das hier beschriebene Verfahren angewendet, kann die Existenz eines Datensatzes nicht mehr abgestritten werden. Der Versicherer kann die Pflicht des Eintrittswilligen, seine Vorgeschichte vollständig und wahrheitsgemäß zu offenbaren, von Anfang an mit technischen Mitteln durchsetzen und bei einem Betrugsversuch von vornherein den Antrag ablehnen, statt erschlichene Leistungen später gerichtlich einzuklagen.

Eine weitere beispielhafte Anwendung ist die Verhinderung von Steuerbetrug. Beispielsweise kann das Verfahren genutzt werden, um die für Anfang Januar 2020 geplante Verpflichtung zum Einsatz manipulationsgeschützter Registrierkassen umzusetzen. Ebenso können Messdaten, die einen Rückschluss auf die Menge tatsächlich produzierter verbrauchssteuerpflichtiger Waren zulassen, vor Manipulation geschützt werden und zugleich vollständig im Unternehmen verbleiben.

Die zuvor beschriebene Anwendung bei industriellen Feldgeräten enthält allgemein die Lehre, dass es vorteilhaft ist, ein lieferndes Gerät, das Nutzdaten erfasst, einen Hashwert hierüber bildet und die Nutzdaten signiert, mit einem verwahrenden Gerät zu koppeln, das die Signatur prüft und bei positivem Ergebnis der Prüfung die Nutzdaten manipulationsgeschützt abspeichert.

Daher bezieht sich die Erfindung auch auf ein hierfür ausgerüstetes verwahrendes Gerät. Dieses verwahrende Gerät umfasst mindestens eine erste Schnittstelle, die mit einem Feldgerät, das mit einem industriellen Produktionsprozess in direkter Beziehung steht, als lieferndes Gerät verbindbar ist. Weiterhin umfasst das verwahrende Gerät eine zweite Schnittstelle, die mit einem reversiblen Speicher verbindbar ist, sowie eine Logikeinheit.

Die zweite Schnittstelle kann ein beliebiger Controller für den Anschluss eines internen oder externen Speichergeräts über beispielsweise USB, IDE, SATA, IEEE 1394, SCSI oder einen anderen Standard sein. Die zweite Schnittstelle kann aber auch beispielsweise eine Netzwerkschnittstelle für die Speicherung von Daten in einer Cloud sein.

Die Logikeinheit ist dazu ausgebildet, mindestens einen Datensatz von dem liefernden Gerät entgegenzunehmen, eine in dem Datensatz enthaltene kryptographische Signatur mit einem dem liefernden Gerät zugeordneten öffentlichen Schlüssel zu prüfen und den Datensatz bei positivem Ergebnis der Prüfung an den reversiblen Speicher zu übermitteln.

Auf diese Weise kann insbesondere dann, wenn einem verwahrenden Gerät mehrere liefernde Geräte zugeordnet sind, ein erheblicher Hardwareaufwand eingespart werden. Zum einen muss nicht jedes liefernde Gerät einen vergleichsweise aufwendigen Controller für den Zugriff auf den reversiblen Speicher beinhalten. Zum anderen kann auf Grund der Sicherung mit der Signatur auch die Datenverbindung zwischen dem liefernden Gerät und dem verwahrenden Gerät einfach ausgeführt werden und braucht per se nicht gegen Manipulation gesichert zu sein.

Besonders vorteilhaft ist die erste Schnittstelle in diesem Zusammenhang als Zweileiterschnittstelle oder als eine auf einen Sendezeitanteil von höchstens 10 % limitierte Funkschnittstelle ausgebildet. Diese Schnittstellen stellen geteilte Medien bereit, über die sich sehr viele liefernde Geräte, beispielsweise busförmig, anbinden lassen. Gerade ein geteiltes Medium ist aber prinzipiell anfällig für Manipulation der übertragenen Daten. Diese Anfälligkeit wird durch die Prüfung der Signatur ausgeglichen.

In einer besonders vorteilhaften Ausgestaltung ist zusätzlich eine dritte Schnittstelle vorgesehen, die mit einem persistenten Speicher verbindbar ist. Die Logikeinheit ist dann zusätzlich dazu ausgebildet, Vorgänger-Hashwerte aus dem persistenten Speicher abzurufen und an das liefernde Gerät zu übermitteln, sowie Aktuell-Hashwerte aus den vom liefernden Gerät erhaltenen Datensätzen in dem persistenten Speicher abzulegen. Dann kann das verwahrende Gerät in dem persistenten Speicher entsprechend dem zuvor beschriebenen Verfahren eine Historie der Hashwerte führen. Insbesondere kann das verwahrende Gerät mit der Übermittlung der Vorgänger-Hashwerte die Reihenfolge steuern, in der von einer Vielzahl angebundener liefernder Geräte Daten abgerufen und in einer oder mehreren Ketten von Datensätzen zusammengeführt werden.

In einer besonders vorteilhaften Ausgestaltung ist die dritte Schnittstelle als Client ausgebildet, der das verwahrende Gerät als vollwertigen Teilnehmer in ein als persistenten Speicher fungierendes Blockchain-Netzwerk zu integrieren vermag. Insbesondere wenn es sich hierbei um eine öffentliche Blockchain handelt, ist es vorteilhaft, den hierfür erforderlichen Aufwand nur einmal auf dem verwahrenden Gerät treiben zu müssen, anstatt auf jedem der daran angebundenen liefernden Geräte separat. So wird beispielsweise viel Speicherplatz und eine schnelle Netzwerkanbindung benötigt, um eine komplette Kopie der Blockchain lokal zu speichern und stets aktuell zu halten. Auch ist es unter Sicherheitsaspekten vorteilhaft, den Kontakt mit einer Blockchain im Internet vom verwahrenden Gerät aus vorzunehmen und nicht unmittelbar vom liefernden Gerät aus. Für den Fall, dass die aus einer öffentlichen Blockchain entgegengenommenen Daten zu einem Systemabsturz oder gar zu einer feindlichen Übernahme des verwahrenden Geräts führen, kann diesem verwahrenden Gerät ein rudimentärer Not-Controller zur Seite gestellt werden, an den die liefernden Geräte ebenfalls angebunden sind. Dieser Not-Controller kann insbesondere vom Internet isoliert sein und zumindest noch eine grundlegende Bedienung von daran angebundenen Feldgeräten ermöglichen. Hingegen ist es nicht mit vertretbarem Aufwand möglich, jedes einzelne Feldgerät selbst entsprechend redundant auszulegen. Je nach Wichtigkeit des Feldgeräts, das durch aus der Blockchain empfangene Daten lahmgelegt wurde, kann die Fortführung des Produktionsprozesses insgesamt gefährdet sein.

Entsprechend dem zuvor Beschriebenen bezieht sich die Erfindung auch auf ein lieferndes Gerät. Dieses liefernde Gerät umfasst einen Speicher für einen privaten kryptographischen Schlüssel, eine erste Schnittstelle, die mit einem verwahrenden Gerät verbindbar ist, einen Sensor und/oder eine zweite Schnittstelle, die mit einem Sensor verbindbar ist, sowie eine Logikeinheit.

Die Logikeinheit ist dazu ausgebildet, Messwerte eines oder mehrerer Sensoren als Nutzdaten zu erfassen und optional mit einem vom verwahrenden Gerät erhaltenen Vorgänger-Hashwert zusammenzuführen sowie über die Nutzdaten, bzw. über die Kombination der Nutzdaten mit dem Vorgänger-Hashwert, einen Aktuell-Hashwert zu bilden. Die Logikeinheit ist weiterhin dazu ausgebildet, mit dem privaten kryptographischen Schlüssel eine Signatur des Aktuell-Hashwerts zu bilden sowie die Nutzdaten, den Aktuell-Hashwert, die Signatur und optional auch den Vorgänger-Hashwert zu einem Datensatz zusammenzuführen und an das verwahrende Gerät zu übermitteln.

Auf diese Weise schafft das liefernde Gerät die Voraussetzungen dafür, dass das verwahrende Gerät die manipulationsgeschützte Speicherung durch reversible Speicherung der Datensätze und persistente Speicherung der Hashwerte vornehmen kann. Dabei ist es insbesondere in einem System mit vielen liefernden Geräten und einem verwahrenden Gerät vorteilhaft, dass die Aufgabe, Hashwerte über die Nutzdaten zu bilden, auf den liefernden Geräten dezentralisiert ist. Diese Aufgabe ist zwar einfach genug, dass ein jedes lieferndes Gerät sie mit den vergleichsweise beschränkten Ressourcen seiner Logikeinheit durchführen kann. Auf der anderen Seite wäre der für die Verarbeitung aller Nutzdaten von einer Vielzahl liefernder Geräte erforderliche Aufwand eine merkliche Zusatzbelastung für das verwahrende Gerät.

Das liefernde Gerät kann insbesondere als Füllstandsmessgerät, Grenzstandsmessgerät, Dichtemessgerät, Durchflussmessgerät oder Druckmessgerät ausgeführt sein. Messdaten von diesen Gerätetypen sind besonders häufig relevant für die lückenlose und manipulationsgeschützte Dokumentation der Durchführung industrieller Prozesse.

Die zuvor beschriebene Funktionalität kann insbesondere ganz oder teilweise in Software implementiert sein. Diese Software kann insbesondere als Update oder Upgrade für bestehende Embedded-Systeme in liefernden Geräten und verwahrenden Geräten, oder auch als OEM-Produkt für Hersteller von liefernden und/oder verwahrenden Geräten, verkauft werden und ist insofern ein eigenständiges Produkt. Die Erfindung bezieht sich daher auch auf ein Computerprogramm mit maschinenlesbaren Anweisungen, die, wenn sie auf einem Computer oder auf einem Embedded-System ausgeführt werden, den Computer, bzw. das Embedded-System, zu einem verwahrenden und/oder liefernden Gerät gemäß der Erfindung aufwerten, und/oder den Computer, bzw. das Embedded-System, dazu veranlassen, das Verfahren gemäß der Erfindung auszuführen. Ebenso bezieht sich die Erfindung auch auf ein computerlesbares Medium oder ein Downloadprodukt mit dem Computerprogramm.

### Spezieller Beschreibungsteil

Nachfolgend wird der Gegenstand der Erfindung anhand von Figuren erläutert, ohne dass der Gegenstand der Erfindung hierdurch beschränkt wird. Es ist gezeigt:
Figur 1: Ausführungsbeispiel des Verfahrens 100;
Figur 2: Beispielhaftes Zusammenwirken von lieferndem Gerät 5 und verwahrendem Gerät 6;
Figur 3: Beispiel für einen physikalisch irreversibel beschreibbaren Speicher 4;
Figur 4: Beispielhafte Einbindung einer öffentlichen Blockchain 46 als persistenter Speicher 4.

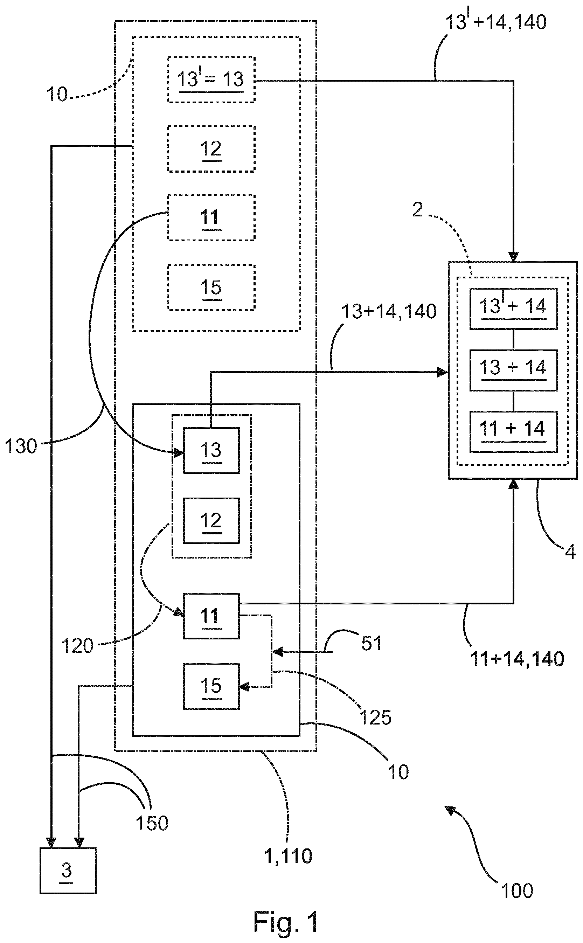

Nach Figur 1 werden die Nutzdaten 12 gemäß Schritt 110 in einer Kette 1 von Datensätzen 10 abgelegt, von denen hier nur zwei exemplarisch dargestellt sind. Ein jeder dieser Datensätze 10 enthält einen gemäß Schritt 130 aus dem vorherigen Datensatz 10 bezogenen, dort als Aktuell-Hashwert 11 fungierenden, Vorgänger-Hashwert 13. Der Datensatz 10 enthält weiterhin Nutzdaten 12, einen gemäß Schritt 120 aus der Kombination von Nutzdaten 12 und Vorgänger-Hashwert 13 gebildeten Aktuell-Hashwert 11 sowie eine gemäß Schritt 125 mit einem privaten Schlüssel 51 gebildete kryptographische Signatur 15 des Aktuell-Hashwerts 11. Der erste Datensatz 10 unterscheidet sich von allen folgenden Datensätzen 10 dahingehend, dass in ihm der vorgegebene Wurzel-Hashwert 13' an die Stelle des Vorgänger-Hashwerts 13 tritt.

Jeder der Hashwerte 13', 13, 11 wird gemäß Schritt 140 mit einem zugehörigen Zeitstempel 14 versehen und in einem persistenten Speicher 4 in einer Kette 2 abgelegt. Die Datensätze 10 selbst, die die Kette 1 bilden, werden gemäß Schritt 150 in einem reversiblen Speicher 3 abgelegt.

Die numerischen Bezugszeichen der Schritte des Verfahrens 100 sind nicht dahingehend einschränkend zu verstehen, dass ihre numerische Reihenfolge die Reihenfolge angibt, in der die Schritte abzuarbeiten sind.

Die zuvor beschriebene wesentliche Wirkung des Verfahrens, nämlich dass mit minimalem Verbrauch an persistentem Speicher 4 beliebige Mengen an Nutzdaten 12 manipulationsgeschützt werden und somit ohne Verlust an Integrität in einem reversiblen Speicher 3 (etwa auf einer Festplatte oder in einer Cloud) abgelegt werden können, ist zunächst einmal unabhängig davon, von welchen Entitäten die einzelnen Schritte jeweils abgearbeitet werden. Beispielsweise kann ein und dasselbe industrielle Feldgerät als lieferndes Gerät 5 das gesamte Verfahren 100 durchführen. Ebenso kann das Feldgerät als lieferndes Gerät 5 Nutzdaten 12 an ein verwahrendes Gerät 6 schicken, wo das Verfahren 100 komplett abgearbeitet wird. Dazwischen sind beliebige Arbeitsteilungen zwischen dem liefernden Gerät 5 und dem verwahrenden Gerät 6 denkbar.

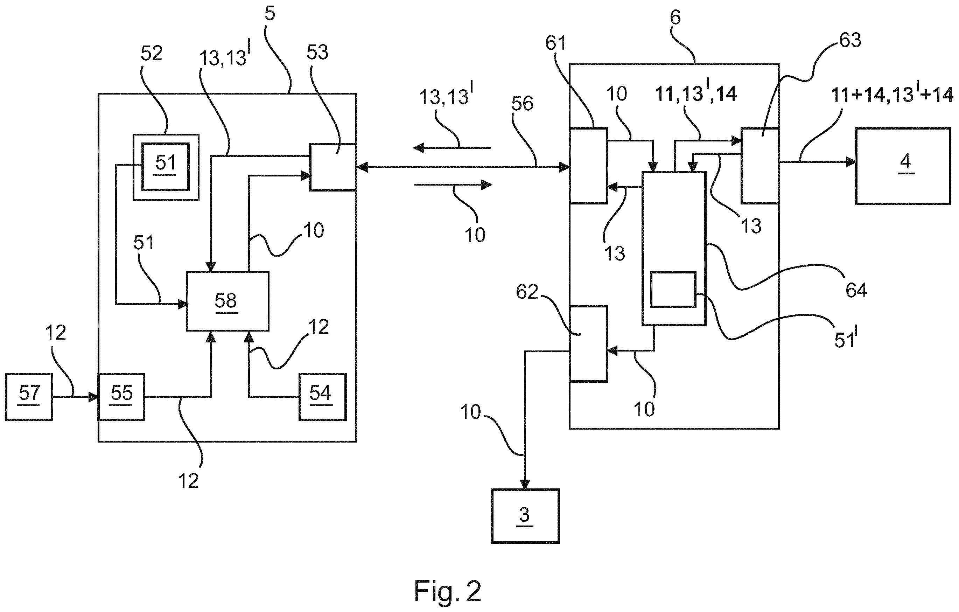

Figur 2 zeigt schematisch ein Beispiel für eine solche Arbeitsteilung zwischen lieferndem Gerät 5 und verwahrendem Gerät 6. Das liefernde Gerät 5 besitzt in dem in Figur 2 gezeigten Szenario einen Speicher 52, der im Betrieb einen privaten kryptographischen Schlüssel 51 enthält. Es ist eine erste Schnittstelle 53 für die Kommunikation mit einem verwahrenden Gerät 6 vorgesehen. Das liefernde Gerät 5 hat weiterhin einen ersten Sensor 54 sowie eine zweite Schnittstelle 55, die mit einem zweiten Sensor 57 verbindbar ist.

Die Sensoren 54 und 57 liefern Nutzdaten 12 an die Logikeinheit 58 des liefernden Geräts 5. In der Logikeinheit 58 werden die Nutzdaten 12 mit über die erste Schnittstelle 53 und die bidirektionale Kommunikationsverbindung 56 von dem verwahrenden Gerät 6 bezogenen Vorgänger-Hashwerten 53, 53' zusammengeführt, und es werden Aktuell-Hashwerte 11 gebildet. Die in Figur 2 nicht erneut eingezeichneten Aktuell-Hashwerte 11 werden zusammen mit den Nutzdaten 12, den Vorgänger-Hashwerten 13', 13 sowie der in Figur 2 ebenfalls nicht erneut eingezeichneten Signatur 15 zu Datensätzen 10 zusammengefasst, die über die erste Schnittstelle 53 und die bidirektionale Kommunikationsverbindung 56 an das verwahrende Gerät 6 übermittelt werden. Die Verbindung 56 kann insbesondere eine Zweidrahtleitung, eine sendezeitbegrenzte Funkverbindung oder ein anderer schmalbandiger Kanal sein.

In dem in Figur 2 gezeigten Szenario ist einem verwahrenden Gerät 6, das hier als Controller für Feldgeräte ausgebildet ist, eine Vielzahl von Feldgeräten als liefernde Geräte 5 zugeordnet. Zur Veranschaulichung ist jedoch nur eines dieser liefernden Geräte 5 exemplarisch dargestellt.

Das verwahrende Gerät 6 ist hardwaremäßig deutlich stärker ausgestattet als das liefernde Gerät 5. Neben einer ersten Schnittstelle 61 für die Kommunikation mit dem liefernden Gerät 5 verfügt das verwahrende Gerät über eine zweite Schnittstelle 62, die mit dem reversiblen Speicher 3 verbunden ist. Weiterhin ist eine dritte Schnittstelle 63 vorgesehen, die mit dem persistenten Speicher 4 verbunden ist.

Das verwahrende Gerät 6 enthält eine Logikeinheit 64, die vom liefernden Gerät 5 bezogene Datensätze 10 mit einem zu dem privaten Schlüssel 51 des liefernden Geräts 5 korrespondierenden öffentlichen Schlüssel 51' dahingehend prüft, ob sie eine korrekte Signatur 15 tragen. Ist dies der Fall, werden die Datensätze 10 in dem reversiblen Speicher 3 abgelegt.

Weiterhin legt die Logikeinheit 64 des verwahrenden Geräts 6 auch die aus den Datensätzen 10 entnommenen Aktuell-Hashwerte 11 in dem persistenten Speicher 4 ab, versehen jeweils mit einem aktuellen Zeitstempel 14. Auch ein vom verwahrenden Gerät generierter Wurzel-Hashwert 13' wird mit einem zugehörigen Zeitstempel 14 in dem persistenten Speicher 4 hinterlegt.

Umgekehrt werden Vorgänger-Hashwerte 13 aus dem persistenten Speicher 13 abgerufen und an das liefernde Gerät 5 übermittelt, um die Übermittlung eines neuen Datensatzes 10 anzufragen. Auf diese Weise kann insbesondere eine Vielzahl von liefernden Geräten 5 reihum abgefragt werden, um anschließend die zu den jeweiligen Datensätzen 10 gehörenden Aktuell-Hashwerte 11 in ein und demselben persistenten Speicher 4 zu sammeln.

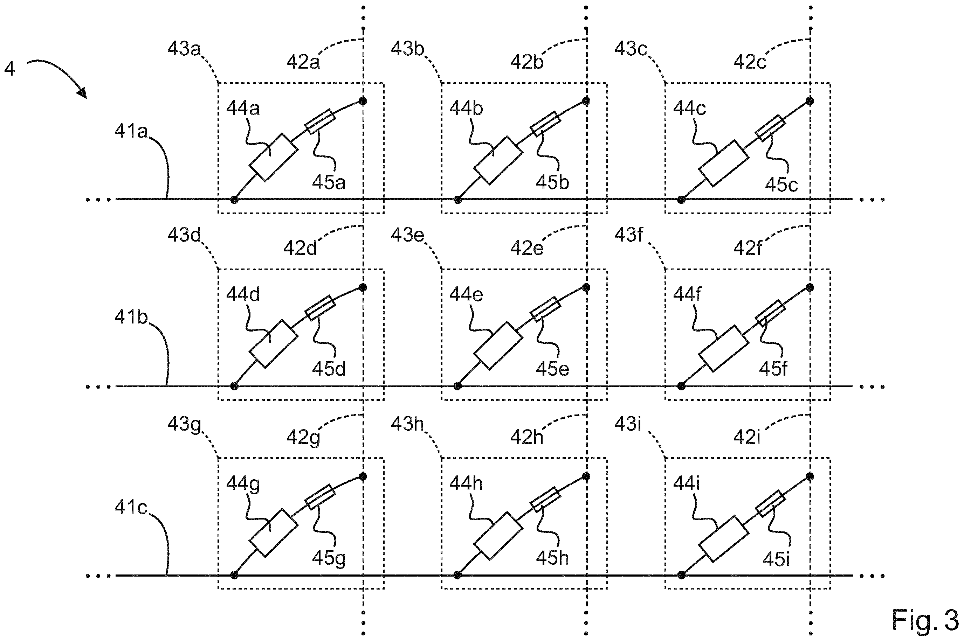

Figur 3 zeigt ein Beispiel für einen persistenten Speicher 4, der physikalisch dafür ausgelegt ist, irreversibel beschrieben zu werden. Jede der in Figur 3 beispielhaft dargestellten neun Speicherzellen 43a-43i enthält jeweils eine Reihenschaltung aus einem Widerstand 44a-44i und einer Sicherung 45a-45i. Diese Reihenschaltung verbindet genau eine der Wordlines 41a-41c mit genau einer der Bitlines 42a-42c. Dabei verlaufen die Wordlines 41a-41c in der Zeichenebene und die Bitlines 42a-42c in einer Ebene hinter der Zeichenebene.

Wird über die zugehörige Kombination aus Wordline 41a-41c und Bitline 42a-42c eine Lesespannung an eine Speicherzelle 43a-43i angelegt, so fließt ein detektierbarer Strom (logische 1), wenn die jeweilige Sicherung 45a-45i intakt ist. Ist die Sicherung 45a-45i hingegen durchgebrannt, fließt kein Strom (logische 0).

Durch Anlegen einer höheren Schreibspannung an die Speicherzelle 43a-43i kann ein so hoher Strom durch die jeweilige Sicherung 45a-45i getrieben werden, dass diese durchbrennt. Auf diese Weise kann die Speicherzelle 43a-43i irreversibel von einer logischen 1 auf eine logische 0 umgeschaltet werden. Ein Speicher 4 dieser Art ist eine endliche Ressource. Daher ist es besonders vorteilhaft, dass das zuvor beschriebene Verfahren unabhängig vom Volumen der gegen Manipulation zu schützenden Nutzdaten 4 sehr sparsam mit dem persistenten Speicher 4 umgeht.

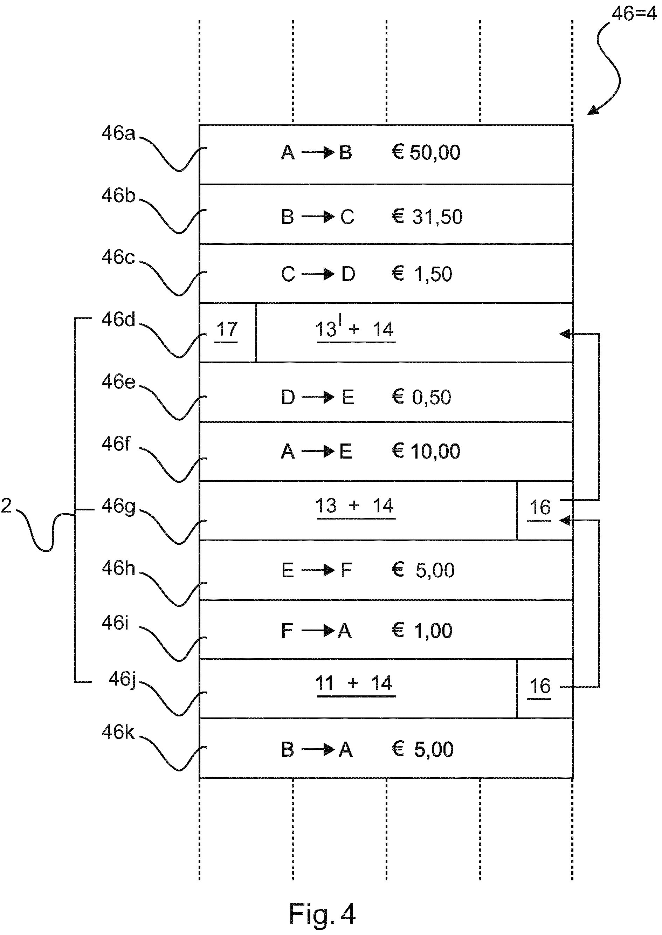

Figur 4 zeigt ein Beispiel für die Nutzung einer öffentlichen Blockchain 46 auf Ethereum-Basis als persistenter Speicher 4. Von den in der Blockchain 46 enthaltenen und über Hashes miteinander verketteten Blöcken sind elf Blöcke 46a-46k beispielhaft dargestellt. Aus Gründen der Übersichtlichkeit sind in den Blöcken 46a-46k nur die jeweiligen Nutzdaten angegeben. Hashes und andere Interna des Blockchain-Protokolls sind weggelassen.

Die ersten drei Blöcke 46a-46c enthalten monetäre Transaktionen zwischen vier Teilnehmern A-D. Der vierte Block 46d enthält einen Header 17, der darauf hinweist, dass dieser Block 46d der Beginn einer Kette 2 von Hashwerten 13', 13, 11 ist, die gemäß dem zuvor beschriebenen Verfahren gebildet wird. Weiterhin enthält der Block 46d den zu der Kette 2 gehörigen Wurzel-Hashwert 13' sowie einen zugehörigen Zeitstempel 14. Optional kann der Header 17 auch weggelassen werden.

An den Block 46d schließen sich wieder zwei Blöcke 46e, 46f mit monetären Transaktionen zwischen Teilnehmern A, D und E an. Block 46g enthält den nächsten Hashwert 13 der Kette 2 sowie einen zugehörigen Zeitstempel 14. Zusätzlich ist in Block 46g auch ein Zeiger 16 auf den Block 46d enthalten. Aus dem Fehlen eines solchen Zeigers in Block 46d kann gefolgert werden, dass dort der Beginn der Kette 2 zu finden ist; insofern kann der Header 17 in Block 46d auch weggelassen werden.

An den Block 46g schließen sich zwei weitere Blöcke 46h, 46i mit monetären Transaktionen zwischen Teilnehmern A, E und F an. Block 46j ist wiederum der Kette 2 zugeordnet und enthält den Aktuell-Hashwert 11 nebst zugehörigem Zeitstempel 14, sowie auch einen Zeiger 16 auf den Block 46g, der den vorherigen Hashwert 13 der Kette 2 enthält. Der nächste Block 46k enthält wiederum eine monetäre Transaktion zwischen Teilnehmern A und B.

Die Blockchain 46 ist dafür ausgelegt, praktisch beliebig lange fortgeführt zu werden, damit es immer möglich sein wird, in der zugehörigen Kryptowährung Transaktionen zu tätigen. Somit stößt der verfügbare Speicherplatz in der Blockchain 46 an keine prinzipielle Grenze. Das Anfügen neuer Blöcke an die Blockchain 46 muss jedoch durch einen Konsens der die Kryptowährung schürfenden Teilnehmer (Miner) der Blockchain bestätigt werden. Der Konsens kostet Aufwand in Form von "Proof of Stake" oder "Proof of Work". Diesen Aufwand lassen sich die Miner mit einer Gebühr ("Mining Fee") vergüten, die typischerweise von der Menge der an die Blockchain anzuhängenden Informationen abhängt. Meist priorisieren die Miner die anzuhängenden Informationen auch nach der Höhe der dafür jeweils gebotenen Mining Fee. Daher ist Speicherplatz in einer öffentlichen Blockchain 46, die als persistenter Speicher 4 genutzt wird, zwar keine endliche Ressource, aber teuer.

Unabhängig davon, welche Art von persistentem Speicher 4 genutzt wird, kann ein gegebener Datensatz 10, der aus beliebiger Quelle erhalten wurde, sehr einfach auf Authentizität überprüft werden. Wenn
- der Aktuell-Hashwert 11 und der Vorgänger-Hashwert 13 mit den entsprechenden im persistenten Speicher 4 hinterlegten Werten übereinstimmen,
- die Hashbildung über die Daten (etwa Vorgänger-Hashwert 13 und Nutzdaten 12), die nominell in den Aktuell-Hashwert 11 eingeflossen sind, auf den richtigen Aktuell-Hashwert 11 führt, und
- die digitale Signatur 15 des Datensatzes 10 gültig ist,
   dann ist sichergestellt, dass
- die Nutzdaten 12 in dem Datensatz in einem Zeitraum gewonnen wurden, der zwischen dem Zeitstempel 14 des Vorgänger-Hashwerts 13 und dem Zeitstempel 14 des Aktuell-Hashwerts 11 liegt,
- die Nutzdaten 12 seither nicht mehr verändert wurden und
- die Nutzdaten 12 auch von dem liefernden Gerät 5 stammen, das über den privaten Schlüssel 51 verfügt.

### Bezugszeichenliste

- 1: Kette von Datensätzen 10
- 10: Datensatz
- 11: Aktuell-Hashwert in Datensatz 10
- 12: Nutzdaten in Datensatz 10
- 13: Vorgänger-Hashwert in Datensatz 10
- 13': Wurzel-Hashwert in erstem Datensatz 10
- 14: Zeitstempel
- 15: Signatur
- 16: Zeiger auf vorherigen Hashwert 13', 13
- 17: Header am Beginn der Kette 2
- 2: Kette von Hashwerten 13', 13, 11
- 3: reversibler Speicher
- 4: persistenter Speicher
- 41a-41c: Wordlines eines physischen persistenten Speichers 4
- 42a-42c: Bitlines des physischen persistenten Speichers 4
- 43a-43i: Speicherzellen des physischen persistenten Speichers 4
- 44a-44i: Widerstände in Speicherzellen 43a-43i
- 45a-45i: Sicherungen in Speicherzellen 43a-43i
- 46: Blockchain als persistenter Speicher 4
- 46a-46k: Blöcke in Blockchain 46
- 5: lieferndes Gerät
- 51: privater Schlüssel des liefernden Geräts 5
- 51': öffentlicher Schlüssel, korrespondiert zu privatem Schlüssel 51
- 52: Speicher für privaten Schlüssel 51
- 53: erste Schnittstelle zum verwahrenden Gerät 6
- 54: Sensor in lieferndem Gerät 5
- 55: zweite Schnittstelle zu Sensor 57
- 56: Kommunikationsverbindung zu verwahrendem Gerät 6
- 57: Sensor, an zweite Schnittstelle 55 angeschlossen
- 58: Logikeinheit in lieferndem Gerät 5
- 6: verwahrendes Gerät
- 61: erste Schnittstelle zum liefernden Gerät 5
- 62: zweite Schnittstelle zum reversiblen Speicher 3
- 63: dritte Schnittstelle zum persistenten Speicher 4
- 64: Logikeinheit in verwahrendem Gerät 6
- 100: Verfahren
- 110: Ablage von Datensätzen 10 in Kette 1
- 120: Ablage eins Aktuell-Hashwertes 11 im Datensatz 10
- 125: Bildung einer Signatur 15 und Ablage im Datensatz 10
- 130: Ablage eines Vorgänger-Hashwerts 13 im Datensatz 10
- 140: Ablage einer Kette 2 der Hashwerte in persistentem Speicher 4
- 150: Ablage der Datensätze 10 in reversiblem Speicher 3

## Patentansprüche

1. Verfahren (100) zur manipulationssicheren Speicherung von Nutzdaten (12) wobei
• die Nutzdaten (12) in einer Kette (1) von Datensätzen (10) abgelegt werden (110), wobei diese Datensätze (10) durch ein erstes, lieferndes Gerät (5) erstellt werden, wobei
∘ das liefernde Gerät (5) ein Feldgerät ist, das mit einem industriellen Produktionsprozess in direkter Beziehung steht und als Füllstandmessgerät, Grenzstandmessgerät, Dichtemessgerät, Durchflussmessgerät oder Druckmessgerät ausgeführt ist, und
∘ die Nutzdaten Messwerte mindestens eines Sensors (54, 57) umfassen, welcher in dem Feldgerät enthalten oder an das Feldgerät angeschlossen ist;
• für jeden Datensatz (10) ein Aktuell-Hashwert (11) mindestens über die in dem Datensatz (10) enthaltenen Nutzdaten (12) gebildet und in dem Datensatz (10) abgelegt wird (120);
• in jedem Datensatz (10) ein Vorgänger-Hashwert (13) abgelegt wird (130), der dem Aktuell-Hashwert (11) des vorherigen Datensatzes (10) entspricht, wobei im ersten Datensatz (10) der Kette (1) ein vorgegebener Wurzel-Hashwert (13') an die Stelle des Vorgänger-Hashwerts (13) tritt;
• eine Kette (2) der Hashwerte (13', 13, 11) durch ein zweites, verwahrendes Gerät (6) in einem persistenten Speicher (4) abgelegt wird (140) dergestalt, dass ein in dem persistenten Speicher (4) einmal abgelegter Inhalt im Nachhinein weder veränderbar noch aus dem persistenten Speicher (4) entfernbar ist und dass der Inhalt des persistenten Speichers keinen Rückschluss auf die Nutzdaten (12) selbst zulässt; und
• die Datensätze (10) in einem von dem persistenten Speicher (4) verschiedenen reversiblen Speicher (3) abgelegt werden (150).

2. Verfahren nach Anspruch 1, wobei mindestens einer der Hashwerte (13', 13, 11) in der Kette (2) gemeinsam mit einem Zeitstempel (14) in dem persistenten Speicher (4) abgelegt wird (140), und/oder die Nutzdaten (12) mindestens eines Datensatzes (10) einen Zeitstempel (14) enthalten.

3. Verfahren nach einem der Ansprüche 1 bis 2, wobei für mindestens einen Datensatz (10) die Nutzdaten (12), und/oder der Aktuell-Hashwert (11), dieses Datensatzes (10) mit einem privaten kryptographischen Schlüssel (51) signiert werden und die Signatur (15) mit in den Datensatz (10) aufgenommen wird (125).

4. Verfahren nach einem der Ansprüche 1 bis 3, wobei der Aktuell-Hashwert (11) mindestens über eine Kombination aus den Nutzdaten (12) und dem Vorgänger-Hashwert (13, 13') gebildet wird (120).

5. Verfahren nach Anspruch 3 und 4, wobei das verwahrende Gerät (6) über eine bidirektionale Kommunikationsverbindung (56) den Vorgänger-Hashwert (13, 13') an das liefernde Gerät (5) übermittelt, wobei das liefernde Gerät unter Verwendung dieses Vorgänger-Hashwerts (13, 13') den jeweils nächsten Datensatz (10) erstellt und an das verwahrende Gerät (6) übermittelt.

6. Verfahren nach einem der Ansprüche 1 bis 5, wobei ein Speicher, dessen physikalischer Schreibprozess irreversibel ist, als persistenter Speicher (4) gewählt wird.

7. Verfahren nach einem der Ansprüche 1 bis 6, wobei ein verteilter Blockchain-Speicher, dessen Inhalt durch einen Konsens einer Vielzahl von Teilnehmern fortgeschrieben wird, als persistenter Speicher (4) gewählt wird.

8. Verwahrendes Gerät (6), **umfassend**
• eine erste Schnittstelle (61), die mit einem Feldgerät, das mit einem industriellen Produktionsprozess in direkter Beziehung steht, als lieferndes Gerät (5) verbindbar ist, wobei das Feldgerät als Füllstandmessgerät, Grenzstandmessgerät, Dichtemessgerät, Durchflussmessgerät oder Druckmessgerät ausgeführt ist;
• eine zweite Schnittstelle (62), die mit einem reversiblen Speicher (3) verbindbar ist,
• eine dritte Schnittstelle (63), die mit einem persistenten Speicher (4) verbindbar ist, wobei ein in dem persistenten Speicher (4) einmal abgelegter Inhalt im Nachhinein weder veränderbar noch aus dem persistenten Speicher (4) entfernbar ist und dass der Inhalt des persistenten Speichers keinen Rückschluss auf die Nutzdaten (12) selbst zulässt, sowie
• eine Logikeinheit (64), die dazu ausgebildet ist,
∘ mindestens einen Datensatz (10) von dem liefernden Gerät (5) entgegenzunehmen, wobei die Nutzdaten (12) in diesem Datensatz (10) Messwerte mindestens eines Sensors (54, 57) umfassen, welcher in dem Feldgerät enthalten oder an das Feldgerät angeschlossen ist;
∘ eine in dem Datensatz (10) enthaltene kryptographische Signatur mit einem dem liefernden Gerät (5) zugeordneten öffentlichen Schlüssel (51') zu prüfen und
∘ den Datensatz (10) bei positivem Ergebnis der Prüfung an den reversiblen Speicher (3) zu übermitteln,
∘ Vorgänger-Hashwerte (13) aus dem persistenten Speicher (4) abzurufen und an das liefernde Gerät (5) zu übermitteln und
∘ Aktuell-Hashwerte (11) aus den vom liefernden Gerät (5) erhaltenen Datensätzen (10) in dem persistenten Speicher (4) abzulegen.

9. Verwahrendes Gerät (6) nach Anspruch 8, wobei die erste Schnittstelle (61) als Zweileiterschnittstelle oder als eine auf einen Sendezeitanteil von höchstens 10 % limitierte Funkschnittstelle ausgebildet ist.

10. Verwahrendes Gerät (6) nach einem der Ansprüche 8 bis 9, wobei die dritte Schnittstelle (63) als Client ausgebildet ist, der das verwahrende Gerät (6) als vollwertigen Teilnehmer in ein als persistenten Speicher (4) fungierendes Blockchain-Netzwerk zu integrieren vermag.

11. Lieferndes Gerät (5), **umfassend** einen Speicher (52) für einen privaten kryptographischen Schlüssel (51), eine erste Schnittstelle (53), die mit einem verwahrenden Gerät (6) verbindbar ist, einen Sensor (54) und/oder eine zweite Schnittstelle (55), die mit einem Sensor (57) verbindbar ist, weiterhin umfassend eine Logikeinheit (58), die dazu ausgebildet ist,
• Messwerte eines oder mehrerer Sensoren (54, 57) als Nutzdaten (12) zu erfassen und mit einem vom verwahrenden Gerät erhaltenen Vorgänger-Hashwert (13) zusammenzuführen,
• über die Kombination der Nutzdaten (12) mit dem Vorgänger-Hashwert (13) einen Aktuell-Hashwert (11) zu bilden,
• mit dem privaten kryptographischen Schlüssel (51) eine Signatur (15) des Aktuell-Hashwerts (11) zu bilden sowie
• die Nutzdaten (12), den Aktuell-Hashwert (11), die Signatur (15) und den Vorgänger-Hashwert (13) zu einem Datensatz (10) zusammenzuführen und an das verwahrende Gerät (6) zu übermitteln,
und ausgeführt als Füllstandmessgerät, Grenzstandmessgerät, Dichtemessgerät, Durchflussmessgerät oder Druckmessgerät.

12. Computerprogramm, enthaltend maschinenlesbare Anweisungen, die, wenn sie auf einem Computer oder auf einem Embedded-System ausgeführt werden, den Computer, bzw. das Embedded-System, zu einem verwahrenden Gerät (6) nach einem der Ansprüche 8 bis 10 und/oder zu einem liefernden Gerät (5) nach Anspruch 11 aufwerten, und/oder den Computer, bzw. das Embedded-System, dazu veranlassen, ein Verfahren nach einem der Ansprüche 1 bis 7 durchzuführen.

13. Computerlesbares Medium oder Downloadprodukt mit dem Computerprogramm nach Anspruch 12.

## Claims

1. A method (100) for manipulation-proof storage of payload data (12), wherein
• the payload data (12) is stored (110) in a chain (1) of records (10), wherein these records (10) are created by a first, delivering device (5), wherein
∘ the delivering device (5) is a field device that stands in a direct relationship with an industrial production process and is configured as a filling-level measuring device, a level-limit measuring device, a density measuring device, a flow measuring device or a pressure measuring device, and
∘ the payload data comprises measurement values of at least one sensor (54, 57) that is comprised in the field device or connected to the field device;
• for every record (10), a current hash value (11) over at least the payload data (12) comprised in the record (10) is created and stored (120) in the record (10);
• in every record (10), a predecessor hash value (13) is stored (130) that corresponds to the current hash value (11) of the preceding record (10), wherein, in the first record (10) of the chain (1), a predetermined root hash value (13') takes the place of the predecessor hash value (13);
• a chain (2) of the hash values (13', 13, 11) is stored (140) in a persistent memory (4) by a second, safekeeping device (6) in a manner that content, once stored in the persistent memory (4), can neither be changed nor removed from the persistent memory (4) after the fact and that the content of the persistent memory allows no conclusion as to the payload data (12) itself; and
• the records (10) are stored (150) in a reversible memory (3) that is different from the persistent memory (4).

2. The method of claim 1, wherein at least one of the hash values (13', 13, 11) in the chain (2) is stored (140) in the persistent memory together with a timestamp (14), and/or the payload data (12) of at least one record (10) comprise a timestamp (14).

3. The method of any one of claims 1 to 2, wherein, for at least one record (10), the payload data (12), and/or the current hash value (11), of this record (10) are signed with a private cryptographic key (51), and the signature (15) is included (125) into the record (10).

4. The method of any one of claims 1 to 3, wherein the current hash value (11) is created (120) at least over a combination of the payload data (12) and the predecessor hash value (13, 13').

5. The method of claim 3 and 4, wherein the safekeeping device (6) transmits the predecessor hash value (13, 13') to the delivering device (5) over a bidirectional communication link (56), wherein the delivering device creates, using this predecessor hash value (13, 13'), the respective next record (10) and transmits it to the safekeeping device (6).

6. The method of any one of claims 1 to 5, wherein a memory whose physical writing process is irreversible is chosen as persistent memory (4).

7. The method of any one of claims 1 to 6, wherein a distributed blockchain memory, whose content is updated by a consensus of a plurality of participants, is chosen as persistent memory (4).

8. A safekeeping device (6), **comprising:**
• a first interface (61) that is connectable to a field device that stands in a direct relationship with an industrial production process as delivering device (5), wherein the field device is configured as a filling-level measuring device, a level-limit measuring device, a density measuring device, a flow measuring device or a pressure measuring device;
• a second interface (62) that is connectable to a reversible memory (3),
• a third interface (63) that is connectable to a persistent memory (4), wherein content, once stored in the persistent memory (4), can neither be changed nor removed from the persistent memory (4) after the fact and that the content of the persistent memory allows no conclusion as to the payload data (12) itself, as well as
• a logic unit (64) configured to:
∘ receive at least one record (10) from the delivering device (5), wherein the payload data (12) in this record (10) comprise measurement values of at least one sensor (54, 57) that is comprised in the field device or connected to the field device;
∘ verify a cryptographic signature contained in the record (10) using a public key (51') associated with the delivering device (5), and
∘ transmit the record (10) to the reversible memory (3) in response to a positive outcome of the verification,
∘ recall predecessor hash values (13) from the persistent memory (4) and transmit them to the delivering device (5), and
∘ store current hash values (11) from the records (10) received from the delivering device (5) in the persistent memory (4).

9. The safekeeping device (6) of claim 8, wherein the first interface (61) is configured as a two-conductor interface or as a radio interface limited to a transmit duty cycle of at most 10 %.

10. The safekeeping device (6) of any one of claims 8 to 9, wherein the third interface (63) is configured as a client that is able to integrate the safekeeping device (6) as a fully functional participant into a blockchain network serving as persistent memory (4).

11. A delivering device (5), **comprising** a memory (52) for a private cryptographic key (51), a first interface (53) connectable to a safekeeping device (6), a sensor (54) and/or a second interface (55) connectable to a sensor (57), further comprising a logic unit (58) that is configured to:
• capture measurement values of one or more sensors (54, 57) as payload data (12) and combine them with a predecessor hash value (13) received from the safekeeping device,
• create a current hash value (11) over the combination of the payload data (12) with the predecessor hash value (13),
• create a signature (15) of the current hash value (11) using the private cryptographic key (51), as well as
• combine the payload data (12), the current hash value (11), the signature (15) and the predecessor hash value (13) into a record (10) and transmit this to the safekeeping device (6),
and configured as a filling-level measuring device, a level-limit measuring device, a density measuring device, a flow measuring device or a pressure measuring device.

12. A computer program, comprising machine-readable instructions that, when executed on a computer or on an embedded system, upgrade the computer, respectively the embedded system, to the safekeeping device (6) of any one of claims 8 to 10, and/or to the delivering device (5) of claim 11, and/or cause the computer, respectively the embedded system, to perform the method of any one of claims 1 to 7.

13. A computer-readable medium or a download product with the computer program of claim 12.

## Revendications

1. Procédé (100) de mise en mémoire protégée contre la manipulation de données utiles (12) dans lequel
• les données utiles (12) sont disposées (110) dans une chaîne (1) de blocs de données (10), dans lequel ces blocs de données (10) sont établis par un premier appareil fournisseur (5), dans lequel
∘ l'appareil fournisseur (5) est un appareil de terrain, lequel est en relation direction avec un processus de production industriel et est réalisé comme appareil de mesure de remplissage, comme appareil de détection de niveau, comme appareil de mesure de densité, comme appareil de mesure de débit ou comme appareil de mesure de pression, et
∘ les données utiles comprennent des valeurs de mesure d'au moins un capteur (54, 57), lequel est contenu dans l'appareil de terrain ou est raccordé à l'appareil de terrain ;
• pour chaque bloc de données (10) une valeur de hachage actuelle (11) est formée au moins sur les données utiles (12) contenues dans le bloc de données (10) et est déposée (120) dans le bloc de données (10) ;
• dans chaque bloc de données (10) une valeur de hachage devancière (13) est déposée (130), laquelle correspond (11) à la valeur de hachage actuelle (11) du bloc de données précédent (10), dans lequel dans le premier bloc de données (10) de la chaîne (1) une valeur de hachage racine prédéfinie (13') se substitue à la valeur de hachage devancière (13) ;
• une chaîne (2) des valeurs de hachage (13', 13, 11) est déposée (140) dans une mémoire persistante (4) par un deuxième appareil dépositaire (6), de telle sorte qu'un contenu déposé une fois dans la mémoire persistante (4) n'est postérieurement ni modifiable ni effaçable de la mémoire persistante (4) et en ce que le contenu de la mémoire persistante (4) ne permet par lui-même aucune déduction sur les données utiles (12) ; et
• les blocs de données (10) sont déposés (150) dans une mémoire réversible (3) différant de la mémoire persistante (4).

2. Procédé selon la revendication 1, dans lequel au moins une des valeurs de hachage (13', 13, 11) dans la chaîne (2) est déposée (140) conjointement avec une estampille temporelle (14) dans la mémoire persistante (4), et/ou les données utiles (12) d'au moins un bloc de données (10) contiennent une estampille temporelle (14).

3. Procédé selon l'une des revendications 1 à 2, dans lequel pour au moins un bloc de données (10) les données utiles (12) et/ou la valeur de hachage actuelle (11) de ce bloc de données (10) sont signées avec une clé cryptographique privée (51) et la signature (15) est logée (125) dans le bloc de données (10).

4. Procédé selon l'une des revendications 1 à 3, dans lequel la valeur de hachage actuelle (11) est formée (120) au moins par le biais d'une combinaison des données utiles (12) et de la valeur de hachage devancière (13, 13').

5. Procédé selon la revendication 3 et 4, dans lequel l'appareil dépositaire (6) communique la valeur de hachage devancière (13, 13') à l'appareil fournisseur (5) par le biais d'une connexion de communication bidirectionnelle (56), dans lequel l'appareil fournisseur crée, en utilisant cette valeur de hachage devancière (13, 13'), le bloc de données respectivement suivant (10) et le communique à l'appareil dépositaire (6).

6. Procédé selon l'une des revendications 1 à 5, dans lequel une mémoire dont le processus d'écriture est irréversible est sélectionnée comme mémoire persistante (4).

7. Procédé selon l'une des revendications 1 à 6, dans lequel une mémoire à chaîne de blocs distribuée, dont le contenu est actualisé par un consensus d'une pluralité de participants, est sélectionnée comme mémoire persistante (4) .

8. Appareil dépositaire (6), comprenant
• une première interface (61), laquelle peut être raccordée à un appareil de terrain, lequel est en relation direction avec un processus de production industriel, en tant qu'appareil fournisseur (5), dans lequel l'appareil de terrain est réalisé comme appareil de mesure de remplissage, comme appareil de détection de niveau, comme appareil de mesure de densité, comme appareil de mesure de débit ou comme appareil de mesure de pression ;
• une deuxième interface (62), laquelle peut être raccordée à une mémoire réversible (3),
• une troisième interface (63), laquelle peut être raccordée à une mémoire persistante (4), dans lequel un contenu déposé une fois dans la mémoire persistante (4) n'est postérieurement ni modifiable ni effaçable de la mémoire persistante (4) et le contenu de la mémoire persistante (4) ne permet par lui-même aucune déduction sur les données utiles (12), ainsi que
• une unité logique (64), laquelle est conçue de façon
∘ à accepter au moins un bloc de données (10) de l'appareil fournisseur (5), dans lequel les données utiles (12) comprennent dans ce bloc de données (10) des valeurs de mesure d'au moins un capteur (54, 57), lequel est contenu dans l'appareil de terrain ou est raccordé à l'appareil de terrain ;
∘ à vérifier une signature cryptographique contenue dans le bloc de données (10) avec une clé publique (5F) attribuée à l'appareil fournisseur (5) et
∘ à communiquer le bloc de données (10) à la mémoire réversible (3) en cas de résultat positif de la vérification,
∘ à rappeler les valeurs de hachage devancières (13) depuis la mémoire persistante (4) et à les communiquer à l'appareil fournisseur (5) et
∘ à déposer dans la mémoire persistante (4) les valeurs de hachage actuelles (11) des blocs de données (10) obtenus depuis l'appareil fournisseur (5) .

9. Appareil dépositaire (6) selon la revendication 8, dans lequel la première interface (61) est conçue comme interface à deux conducteurs ou comme une interface radio limitée à une fraction de temps de transmission de 10 % au maximum.

10. Appareil dépositaire (6) selon l'une des revendications 8 à 9, dans lequel la troisième interface (63) est conçue comme client, lequel permet d'intégrer l'appareil dépositaire (6) comme participant à part entière dans un réseau de chaîne de blocs fonctionnant comme une mémoire persistante (4).

11. Appareil fournisseur (5), comprenant une mémoire (52) pour une clé cryptographique privée (51), une première interface (53), laquelle peut être raccordée à un appareil dépositaire (6), un capteur (54) et/ou une deuxième interface (55), laquelle peut être raccordée à un capteur (57), comprenant en outre une unité logique (58), laquelle est conçue de façon
• à saisir les valeurs de mesure d'un ou plusieurs capteurs (54, 57) et à les assembler avec une valeur de hachage devancière (13) obtenue d'un appareil dépositaire,
• à former une valeur de hachage actuelle (11) par le biais de la combinaison des données utiles (12) avec la valeur de hachage devancière (13),
• à former avec la clé cryptographique privée (51) une signature (15) de la valeur de hachage actuelle (11) ainsi que
• à assembler les données utiles (12), la valeur de hachage actuelle (11), la signature (15) et la valeur de hachage devancière (13) en un bloc de données (10) et à le communiquer à l'appareil dépositaire (6),
et réalisé comme appareil de mesure de remplissage, comme appareil de détection de niveau, comme appareil de mesure de densité, comme appareil de mesure de débit ou comme appareil de mesure de pression.

12. Programme informatique, contenant des instructions lisibles par machine, lesquelles, lorsqu'elles sont exécutées sur un ordinateur ou un système embarqué, revalorisent l'ordinateur ou le système embarqué en un appareil dépositaire (6) selon l'une des revendications 8 à 10 et/ou en un appareil fournisseur selon la revendication 11, et/ou ordonnent à l'ordinateur ou au système embarqué d'exécuter un procédé selon l'une des revendications 1 à 7.

13. Support lisible par ordinateur ou produit téléchargeable avec le programme informatique selon la revendication 12.
